# EUROPEAN PATENT SPECIFICATION

(11) **EP 0 600 755 B1**
(45) Date of publication and mention of the grant of the patent: **27.03.1996**
(21) Application number: 93309736.2
(22) Date of filing: 03.12.1993
(51) Int. Cl.: A22B 5/00

(54) **A butchery process**
Verfahren zum Zerteilen von Schlachttierkörpern
Procédé de boucherie

(30) Priority: 03.12.1992 GB 9225320
(43) Date of publication of application: 08.06.1994
(73) Proprietor: UNIVERSITY OF BRISTOL, Bristol BS8 1TH (GB)
(72) Inventor: Boadas, Maria Dolores Ciurana, ES-17002-Girona (ES); Perez, Ramon Soler, ES-17002-Girona (ES); Schreiber, Helmut, Dipl.Ing., D-63741 Aschaffenburg (DE); Brunet, Grad Hans, Ing., D-35041 Marburg (DE); Purnell, Graham Laurence, Clevedon, Avon BS21 5AS (GB); Khodabandehloo, Koorosh, Bishopston, Bristol BS7 8EW (GB)
(74) Representative: Hogg, Jeffery Keith

(56) References cited:
- DE-A- 2 735 918
- GB-A- 1 125 502
- US-A- 3 308 502
- US-A- 3 940 998
- US-A- 4 327 633
- US-A- 4 628 569
- F. GERRARD 'MEAT TECHNOLOGY' 1946 , LEONARD HILL LIMITED , LONDON (GB)
- TECHNOLOGICAL DIGESTS vol. 9, no. 10 , October 1964 page 86 I.T.D. NO. 1824 'SEMI-AUTOMATIC DEVICE REMOVES BACK PART OF PIG SKINS, LEAVING IT USABLE FOR LEATHER INDUSTRY'

## Description

### Technical Field

This invention relates to butchery, in particular, a butchery process in which a carcass is divided into primal joints.

When butchering a pig carcass, it is split into two halves or sides along the line of the backbone, sternum and belly and each half is then separately divided into the required primal joints. Conventionally, in a factory butchery process, each side is hung from the hind leg, and is cut from the inside or rib-side of the carcass using the bones as a visual guide as to where to make the appropriate cuts. A saw is used to cut through the bones, and a knife is used to cut through the meat, in some cases, only as far as the skin so that a primal joint such as a chop primal joint, can be stripped away from the skin while the skin remains attached to the carcass. This skin is eventually trimmed from the carcass. Other joints, however, such as bacon and ham primal joints are cut from the carcass with the original skin covering undisturbed. These cutting processes require skilled personnel to ensure that the cuts are made in the correct places and to the correct depth to avoid the meat being contaminated with bone dust or the skin being accidentally pierced which would hamper skinning.

### Disclosure of the Invention

An object of the present invention is to provide a butchery process suitable for use with pig carcasses, and suitable for automation so that the requirement for skilled personnel is reduced.

According to the present invention, this is achieved by a butchery process which involves cutting the carcass from the skin-side, making certain cuts skin-deep only along the dividing lines between primal joints; stripping the skin from some primal joints while leaving them connected to the carcass with other primal joints that are still covered by skin; and then separating these primal joints. In this way, the selective skinning of primal joints is made easier than in the conventional factory butchery process; the removal of the skin from primal joints whilst the joints are still attached to the carcass being a simpler process which can be more readily automated than one where meat has to be cut from the rib-side without cutting the skin.

In one preferred process for butchering pig carcasses, with the carcass suspended from the hind leg or ham primal joint, a substantially horizontal skin-deep cut is made between the ham primal joint and the chop and bacon primal joints; a substantially vertical skin-deep cut is made between the chop and bacon primal joints; and the skin is peeled away from the chop primal joint starting at the horizontal cut and peeling downwards. Preferably, a further cut is made between the skin and meat down the outer edge of the chop primal joint on the cut face so as to further aid removal of the skin.

The skin from the chop primal joint may be removed alone or together with some skin from the lower end of the bacon primal joint and/or together with the front leg primal joint and surrounding skin.

The chop and bacon primal joints are then separated along the vertical skin cut line by cutting through the meat and then sawing through the rib bones along this line. Similarly, the chop and bacon primal joints are separated from the ham primal joint along the horizontal skin cut therebetween cutting through the meat and then sawing through the bones along this line.

In an alternative process, the skin is peeled away from bacon primal joint instead of, or as well as, from the chop primal joint. Again, a skin-deep cut is made horizontally between the ham primal joint and the bacon and chop primal joints, and a skin-deep cut is made vertically between the bacon and chop primal joints if the bacon primal joint only is to be skinned. The skin from the bacon primal joint may be removed with the front leg primal joint by not making a second horizontal cut between the two.

It should be understood that the expression "skin-deep cut" as used herein covers any cut that stops short of the muscle tissue or meat in the carcass, and includes a cut that pierces subcutaneous fat.

### Description of the Drawings

The invention will now be described by way of example with reference to the accompanying drawings:
Figure 1 shows a side of a pig carcass suspended from its hind leg, as seen from the rib-side; and
Figure 2 shows the same side of a pig carcass as Figure 1, but seen from the skin-side.

### Mode of Carrying out the Invention

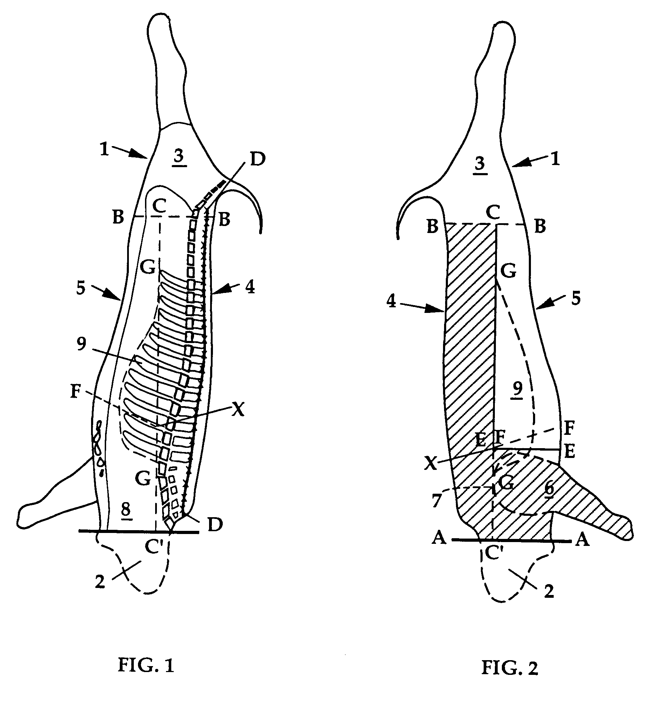

The half carcass or side of a pig carcass 1 shown in Figures 1 and 2 is suspended from its hind leg in a manner so that it can be cut into primal joints by an automated butchery process which involves cutting tools on the skin-side and rib-side of the carcass. The carcass is supported for engagement by the cutting tools, which are controlled to make cuts in predetermined positions and in a predetermined order, as described hereafter. A sensor unit such as a visual scanning unit may help determine the position of the cuts, thereby allowing for variations in the sizes of carcasses.

A first cut along the line A-A serves to remove the neck primal joint 2 from the carcass. This cut A-A is a horizontal cut through both the skin and meat, passing just below the lowest vertebra.

A second cut is made from the skin-side of the carcass along the line B-B, in a horizontal plane through the centre of the last lumber vertebra and passing below the pelvic bone. This cut B-B pierces the skin only of the carcass, and extends fully from the dorsal edge to the ventral edge of the carcass. This cut B-B defines the dividing plane between the ham primal joint 3 above it, and the chop and bacon primal joints 4,5 below it.

A third cut is made, skin-deep only, down the side of the carcass in a vertical plane along the line C-C between the line B-B and a point X between the fourth and fifth ribs (see Figure 1) just above the front leg primal joint 6.

A fourth cut D-D is made from the rib-side of the carcass, as shown in Figure 1, and extends along the dorsal edge of the carcass in the cut face between the skin and meat.

A fifth cut is made from the skin-side through the skin and meat (but not the rib-bones), along a line E-E in a horizontal plane between the point X and the ventral side of the carcass.

Skin peeling equipment now removes the skin from the chop primal joint 4 by gripping the skin on the chop primal joint along the cut B-B and pulling downwards and away from the side of the carcass. A knife operates to free the skin from the meat as peeling proceeds. This process is continued until the knife reaches the scapula 7 when the knife follows the line of the scapula to free it from the rest of the carcass. The skin peeling process is then continued until the skin is removed fully from the chop primal joint 4 and from around the front leg primal joint 6, the skin and the front leg primal joint, shown shaded in Figure 2, then being removed together. In a separate processing step, the skin is trimmed from the front leg primal joint 6.

A sixth cut is made through the rib-bones along the line C-C generally perpendicular to the side of the carcass (i.e. perpendicular to the plane of the drawing surface in Figure 2). This cut extends from the line B-B down the full length of the carcass on an extension C-C' of the line C-C so as to divide the chop primal joint 4 from the bacon primal joint 5. This cut may be made from the skin-side or the rib-side of the carcass.

A seventh cut is made from the skin-side along the line F-F between the fourth and fifth ribs from the point X to the ventral edge of the carcass, to separate the primal joint 8 comprising the lower four ribs.

As an alternative to the seventh cut, a cut may be made along the line G-G following the outline of the ribs to produce a rib primal joint 9. This cut is either made from the skin-side through both the skin and meat to free the rib primal joint from the carcass in one step, to be skinned later in a separate processing step, or the cut is made from the rib-side of the carcass and leaves the skin uncut, the ribs being separated from the skin to produce the required skinned rib primal joint. A meaty rib primal joint can be produced by cutting between the meat and skin to leave the meat on the ribs or the meat can be left on the skin by cutting between the meat and ribs.

A final cut is made from the skin-side on the line B-B through the centre of the last lumber vertebra. This cut is extended by a knife cut through the meat the full length of the line B-B so as to separate the remaining primal joint 5 and the chop primal joint 4 from the ham primal joint 3.

## Claims

1. A butchery process in which a carcass (1) is cut into primal joints (3,4,5) along one or more cut lines (B-B,C-C) characterised by the steps that a cut is made skin-deep only, along at least one of said cut lines (B-B,C-C) from the skin side of the carcass, skin is stripped from a primal joint (4) on one side of said cut line (B-B,C-C) while leaving skin on a primal joint (3,5) on the other side of said cut line (B-B,C-C), and separating these primal joints (3,4,5) by a further cut along said cut line (B-B,C-C).

2. A process as claimed in claim 1 in which said carcass (1) comprises a half carcass and said cut line (C-C) extends along said half carcass defining a chop primal (4) joint on one side of said cut line (C-C) incorporating the backbone, and a belly primal joint (5) on the other side of said cut line (C-C) incorporating the belly.

3. A process as claimed in claim 1 in which said cut line (B-B) extends across the carcass (1) defining a hind leg primal joint (3) on one side of said cut line (B-B), and a primal joint (4,5) on the other side of said cut line (B-B) from which skin is stripped.

4. A process as claimed in claim 3 in which the carcass (1) comprises a half carcass, and skin is stripped from part only of said primal joint (4,5) on said other side of said cut line (B-B).

5. A process as claimed in claim 4 in which a cut is made skin-deep only along a second cut line (C-C) on said other side of said cut line (B-B), and skin is stripped from said primal joint (4 or 5) on one side only of said second cut line (C-C).

6. A process as claimed in claim 5 in which said second cut line (C-C) defines a chop primal joint (4) incorporating the backbone on one side, and a belly primal joint (5) incorporating the belly on the other side.

7. A process as claimed in claim 6 in which skin is stripped from the chop primal joint (4).

8. A process as claimed in claim 7 in which a cut is made along the dorsal edge of the carcass (1) to separate the skin from the chop primal joint (4).

9. A process as claimed in claim 7 or 8 in which said cut along said second cut line (C-C) terminates at a third cut line (E-E) which extends from said second cut line (C-C) across the belly primal joint (5) between the hind and fore legs (3,6) of the carcass (1), a cut being made along said third cut line (E-E) skin-deep only, and skin on the belly primal joint (5) on that side of said third cut line (E-E) incorporating the fore leg (6) being stripped with the skin from the chop primal joint (4).

10. A process as claimed in claim 9 in which the fore leg (6) is separated from the carcass (1) with the skin stripped from the chop primal joint (4) and the belly primal joint (5).

11. A process as claimed in claim 6 in which skin is stripped from the belly primal joint (5).

12. A process as claimed in any one of the preceding claims in which, after said skin is stripped from the carcass (1), a cut is made through it fully along said cut line (B-B,C-C).

13. A process as claimed in any one of claims 5 to 11 in which, after said skin is stripped from the carcass (1), a cut is made through it fully along said second cut line (C-C).

14. A process as claimed in any one of claims 3 to 11 in which the carcass (1) is supported with the hind leg (1) uppermost.

15. A process as claimed in any one of the preceding claims in which the carcass (1) is a pig carcass.

16. A butchery process as claimed in any one of the preceding claims in which said cut is made by a cutter which is guided in a predetermined manner along said cut line.

## Patentansprüche

1. Ein Verfahren zum Zerteilen von Schlachttierkörpern in Hauptstücke (3, 4, 5) längs einer Schnittlinie oder mehrerer Schnittlinien (B-B, C-C), dadurch gekennzeichnet, daß ein nur hauttiefer (nur durch die Haut gehender) Schnitt längs wenigstens einer Schnittlinie (B-B, C-C) von der Hautseite/ Außenseite des Schlachttierkörpers ausgeführt wird, daß die Haut abgezogen wird von einem der Hauptstücke (4) längs einer Seite der Schnittlinie bzw. -linien (B-B, C-C), während die Haut längs der anderen Seite der Schnittlinie (B-B, C-C) auf dem Hauptstück (3, 5) bleibt, worauf die Hauptstücke (3, 4, 5) durch einen weiteren Schnitt längs der Schnittlinie/-linien (B-B, C-C) vollständig voneinander getrennt werden.

2. Ein Verfahren nach Anspruch 1, wobei der Schlachttierkörper eine Längshälfte des Schlachttierkörpers ist und sich die Schnittlinie (C-C) längs der einen Hälfte erstreckt und dabei ein Hauptstück (4) mit Koteletts und Schnitzeln, einschließlich des Rückgrats, längs der einen Seite der Schnittlinie (C-C) und ein Hauptstück (5) mit dem Bauchfleisch an der anderen Seite der Schnittlinie (C-C) bildet.

3. Ein Verfahren nach Anspruch 1, wobei die Schnittlinie (B-B) sich quer über den Schlachttierkörper (1) erstreckt und dadurch ein HinterDein- bzw. Schinkenhauptstück (3) einerseits der Schnittlinie (B-B) und ein Hauptstück (4, 5) an der anderen Seite der Schnittlinie (B-B) bildet, von dem die Haut abgezogen wird.

4. Ein Verfahren nach Anspruch 3, wobei der Schlachttierkörper (1) eine Längshälfte ist und die Haut nur zum Teil abgezogen wird von dem Hauptteil (4, 5) an der anderen Seite der Schnittlinie (B-B).

5. Ein Verfahren nach Anspruch 4, wobei ein nur hauttiefer Schnitt ausgeführt wird, längs einer zweiten Schnittlinie (C-C) an der anderen Seite der Schnittlinie (B-B), und die Haut abgezogen wird von dem Hauptstück (4 oder 5) nur an einer Seite der zweiten Schnittlinie (C-C).

6. Ein Verfahren nach Anspruch 5, wobei die zweite Schnittlinie (C-C) ein Kotelett-Hauptstück (4) mit dem Rückgrat einerseits und ein Bauch-Hauptstück (5) mit dem Bauch andererseits der Schnittlinie (C-C) definiert bzw. bildet.

7. Ein Verfahren nach Anspruch 6, wobei die Haut abgezogen wird von dem Kotelett-Hauptstück (4).

8. Ein Verfahren nach Anspruch 7, wobei ein Schnitt ausgeführt wird längs der Rückenkante des Schlachttierkörpers (1) zum Abtrennen/Abziehen der Haut von dem Kotelett/Hauptstück (4).

9. Ein Verfahren nach Anspruch 7 oder 8, wobei der besagte Schnitt längs der zweiten Schnittlinie (C-C) an einer dritten Schnittlinie (E-E) endet, die sich erstreckt von der zweiten Schnittlinie (C-C) über den Bauch-Hauptteil (5) zwischen den Hinterbeinen und Vorderbeinen (3, 6) des Schlachttierkörpers (1), wobei längs der dritten Schnittlinie (E-E) der Schnitt nur hauttief gemacht wird und die Haut von dem Bauch-Hauptteil (5) an der Seite der dritten Schnittlinie (E-E), welche die Vorderbeine (6) umfaßt, abgezogen wird zusammen mit der Haut von dem Kotelett-Hauptstück (4).

10. Ein Verfahren nach Anspruch 9, wobei das Vorderbein (6) getrennt wird von dem Schlachttierkörper (1), wobei die Haut abgezogen wird von dem Kotelett-Hauptteil (4) und dem Bauch-Hauptteil (5).

11. Ein Verfahren nach Anspruch 6, wobei die Haut von dem BauchHauptteil (5) abgezogen wird.

12. Ein Verfahren nach einem der vorhergehenden Ansprüche, wobei nach dem Abziehen der besagten Haut bzw. dem Hautstück ein Schnitt längs der Schnittlinie (B-B, C-C) vollständig ausgeführt wird.

13. Ein Verfahren nach einem der Ansprüche 5 bis 11, wobei nach dem Abziehen des Hautstückes von dem Schlachttierkörper (1) ein Schnitt vollständig längs der zweiten Schnittlinie (C-C) ausgeführt wird.

14. Ein Verfahren nach einem der Ansprüche 3 bis 11, wobei der Schlachttierkörper mit den Hinterbeinen (1) nach oben aufgehängt ist.

15. Ein Verfahren nach einem der vorhergehenden Ansprüche, wobei der Schlachttierkörper (1) ein Schweine-Schlachttierkörper ist.

16. Ein Verfahren nach einem der vorhergehenden Ansprüche, wobei der besagte Schnitt ausgeführt wird durch ein Schneidegerät, welches geführt ist in einer vorbestimmten Art und Weise längs der besagten Schnittlinie.

## Revendications

1. Procédé de boucherie dans lequel une carcasse (1) est coupée en quartiers principaux (3, 4, 5) le long d'une ou plusieurs lignes de coupe (B-B, C-C), caractérisé par les étapes dans lesquelles une coupe n'est effectuée que sur la profondeur de la peau, le long d'au moins l'une des lignes de coupe (B-B, C-C) à partir du côté peau de la carcasse, la peau est dépouillée d'un quartier principal (4) d'un côté de la ligne de coupe (B-B, C-C) tout en laissant la peau sur un quartier principal (3, 5) de l'autre côté de la ligne de coupe (B-B, C-C), et l'on sépare ces quartiers principaux (3, 4, 5) par une autre coupe le long de la ligne de coupe (B-B, C-C).

2. Procédé selon la revendication 1, dans lequel la carcasse (1) comprend une demi-carcasse et la ligne de coupe (C-C) s'étend le long de la demi-carcasse définissant un quartier principal (4) découpé d'un côté de la ligne de coupe (C-C) incorporant la colonne vertébrale, et un quartier principal de ventre (5) de l'autre côté de la ligne de coupe (C-C) incorporant le ventre.

3. Procédé selon la revendication 1, dans lequel la ligne de coupe (B-B) s'étend en travers de la carcasse (1) en définissant une articulation ou un quartier principal (3) de patte de derrière d'un côté de la ligne de coupe (B-B), et un quartier principal (4, 5) de l'autre côté de la ligne de coupe (B-B), dont la peau est dépouillée.

4. Procédé selon la revendication 3, dans lequel la carcasse (1) comprend une demi-carcasse, et la peau n'est dépouillée que de la partie du quartier principal (4, 5) qui est située de l'autre côté de la ligne de coupe (B-B).

5. Procédé selon la revendication 4, dans lequel une coupe n'est effectuée que sur la profondeur de la peau le long d'une seconde ligne de coupe (C-C) de l'autre côté de la ligne de coupe (B-B), et la peau n'est dépouillée du quartier principal (4 ou 5) que d'un côté seulement de la seconde ligne de coupe (C-C).

6. Procédé selon la revendication 5, dans lequel la seconde ligne de coupe (C-C) définit un quartier principal découpé (4) incorporant la colonne vertébrale d'un côté, et un quartier principal de ventre (5) incorporant le ventre de l'autre côté.

7. Procédé selon la revendication 6, dans lequel la peau est dépouillée du quartier principal découpé (4).

8. Procédé selon la revendication 7, dans lequel une coupe est effectuée le long de la colonne vertébrale de la carcasse (1) pour séparer la peau du quartier principal découpé (4).

9. Procédé selon la revendication 7 ou 8, dans lequel la coupe le long de la seconde ligne de coupe (C-C) se termine à l'endroit d'une troisième ligne de coupe (E-E) qui part de la seconde ligne de coupe (C-C) en travers du quartier principal de ventre (5) entre les pattes arrière et avant (3, 6) de la carcasse (1), une coupe n'étant effectuée le long de la troisième ligne de coupe (E-E) que sur la profondeur de la peau seulement, et la peau du quartier principal de ventre (5) du côté de la troisième ligne de coupe (E-E) qui incorpore la patte de devant (6), étant dépouillée avec la peau du quartier principal découpé (4).

10. Procédé selon la revendication 9, dans lequel la patte de devant (6) est séparée de la carcasse (1) avec la peau dépouillée du quartier principal découpé (4) et du quartier principal de ventre (5).

11. Procédé selon la revendication 6, dans lequel la peau est dépouillée du quartier principal de ventre (5).

12. Procédé selon l'une quelconque des revendications précédentes, dans lequel, après avoir dépouillé la peau de la carcasse (1), on effectue une coupe à travers celle-ci suivant toute la longueur de la ligne de coupe (B-B, C-C).

13. Procédé selon l'une quelconque des revendications 5 à 11, dans lequel, après avoir dépouillé la peau de la carcasse (1), on effectue une coupe à travers celle-ci suivant toute la longueur de la seconde ligne de coupe (C-C).

14. Procédé selon l'une quelconque des revendications 3 à 11, dans lequel la carcasse (1) est supportée avec la patte de derrière (1) en position la plus haute.

15. Procédé selon l'une quelconque des revendications précédentes, dans lequel la carcasse (1) est une carcasse de porc.

16. Procédé de boucherie selon l'une quelconque des revendications précédentes, dans lequel la coupe est effectuée par un couteau qui est guidé d'une manière prédéterminée le long de la ligne de coupe.
